# EUROPEAN PATENT APPLICATION

(11) **EP 2 634 096 A1**
(43) Date of publication of application: **04.09.2013**
(21) Application number: 13153964.5
(22) Date of filing: 05.02.2013
(51) Int. Cl.: B64G 6/00

(54) **Single hinge spacesuit and vehicle port interface**

(30) Priority: 29.02.2012 US 201213407957
(71) Applicant: Hamilton Sundstrand Space Systems International, Inc., Windsor Locks, CT 06096 (US)
(72) Inventor: Thomas, Kenneth S., Manchester, CT Connecticut 06040 (US); Hidalgo, Jorge E., Suffield, CT Connecticut 06078 (US)
(74) Representative: Bridge, Kerry Ann

(57) **Abstract**

An extravehicular activity system includes a vehicle, 10, having a bulkhead providing a port. The bulkhead separates an interior environment and an unenclosed exterior environment. The exterior environment is configured to be exposed to atmospheric pressure in a donning condition. A cover, 22, has a perimeter with a side of the perimeter secured to the bulkhead by a hinged joint. A spacesuit, 12, is supported on the bulkhead in the exterior environment and includes a flange, 32, providing a rear entry opening aligned with the port. A PLSS, 18, is retained in the cover, 22, and spaced from the flange, 32, in the donning condition. The PLSS is configured to be rotated about the hinged joint, 36, and into engagement with the flange, 32, in a donned condition in which the PLSS, 18, is removably secured to the flange, 32.

## Description

### BACKGROUND

This disclosure relates to a spacesuit and vehicle port interface (suitport) used in subject ingress and egress relative to the spaceport.

The suitport concept has evolved from concepts for rear entry space suits donned in conventional airlocks. As a result, existing rear-entry suit systems carry all the mechanisms needed to draw the "backpack" portable life support system (PLSS) to the upper torso of the pressure suit and all the levers, cams, and associated hardware used to secure the backpack to the suit to obtain a robust attachment and pressure seal. These are operated sequentially or in parallel with a vehicle based hatch that is roughly conformal to the rear-mounted "backpack" life support cover.

The suitport concept precludes contamination from the habitat's outer pressure seal outward when the suit-system docks with the suitport. However, it may still expose the habitat to all the particulate and biological contamination that is on the outside surfaces of the backpack life support system if the suit and suitport hatches open sequentially since the rear life support cover is exposed when the suitport is opened for doffing or donning. For concurrent hatch operation in a conventional design, two hinges during opening and closing result in relative motion that limits effective contamination control. It also adds to on-spacesuit mass. Durability and longer service life has increased current extra-vehicular activity (EVA) spacesuit mass to 300 pounds or more.

### SUMMARY

In one embodiment, an extravehicular activity system includes a vehicle having a bulkhead providing a port. The bulkhead separates an interior habitat of a planetary base, space station or pressurized vehicle from the exterior environment. The exterior environment is configured to be exposed to atmospheric pressure in a donning condition. A cover has a perimeter with a side of the perimeter secured to the habitat-side of the bulkhead by a hinged joint. A spacesuit is supported on the bulkhead in the exterior environment and includes a flange providing a rear entry opening aligned with the port. A primary life support system ("PLSS") is retained in the cover and spaced from the flange in the donning condition. The PLSS is configured to be rotated about the hinged joint and into engagement with the flange in a donned condition in which the PLSS is secured to the flange and released from the cover.

In one embodiment, the spacesuit has an upper torso that provides the flange. Soft limbs are secured to the upper torso. A first interlocking device is provided on the flange, and the PLSS includes a second interlocking device configured to couple with the first interlocking device and secure the PLSS to the upper torso in a donned condition. The PLSS is fully detached and spaced apart from the flange in a donning condition in which the first and second interlocking devices are decoupled from one another.

In one example, a method of donning or doffing a spacesuit includes the steps of supporting a spacesuit-mounted PLSS relative to a vehicle, and treating a sealed space between the PLSS and a vehicle to remove contaminants. The PLSS is detached from the spacesuit once the sealed space is treated.

### BRIEF DESCRIPTION OF THE DRAWINGS

The disclosure can be further understood by reference to the following detailed description when considered in connection with the accompanying drawings wherein:
Figure 1A schematically illustrates a subject prior to donning a spacesuit.
Figure 1B is a schematic view of the subject in the process of donning the spacesuit.
Figure 1C is a schematic view of the subject with the spacesuit in the donned condition.
Figure 2 is a cross-sectional view of the vehicle and spacesuit with a rear entry opening to the spacesuit exposed and the PLSS retained in a cover within the habitat, as also shown in Figure 1B.
Figure 3A is a cross-sectional view of the vehicle and spacesuit with a rear entry to the spacesuit exposed enclosed by the PLSS and with the PLSS retained relative to the vehicle, as also shown in Figure 1A.
Figure 3B is an enlarged view of the circled area indicated in Figure 3A.
Figure 4 is a cross-sectional view of the vehicle and spacesuit with the spacesuit detached from the vehicle, as also shown in Figure 1C.
Figure 5A illustrates a PLSS-side of a PLSS to upper torso system when the PLSS is detached from the upper torso as shown in Figure 2. A side view is shown on the left. The right view is as seen from the upper torso .
Figure 5B provides the same views as Figure 5A, but shows the PLSS-side interlock system in the PLSS attached to upper torso position as shown in Figures 3A, 3B and 4.

### DETAILED DESCRIPTION

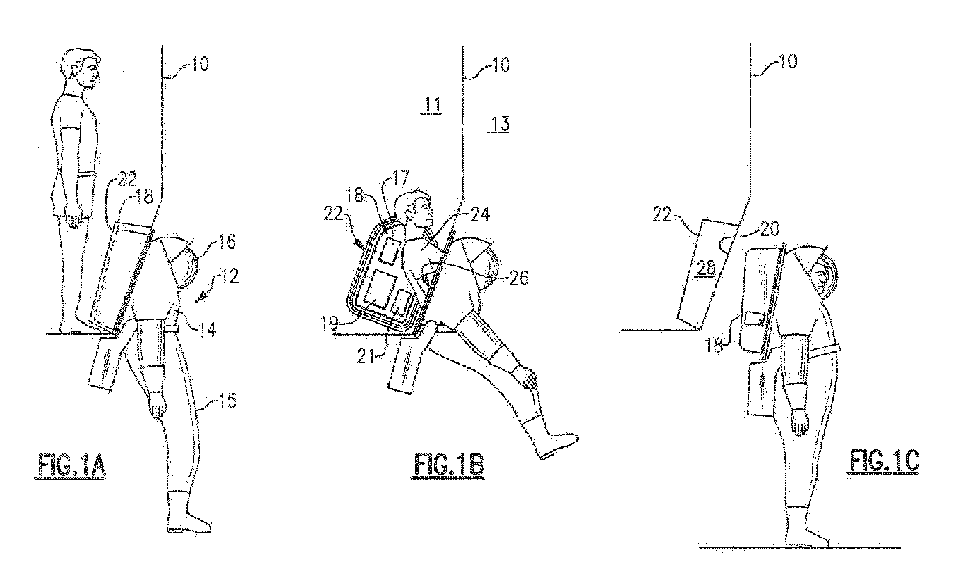

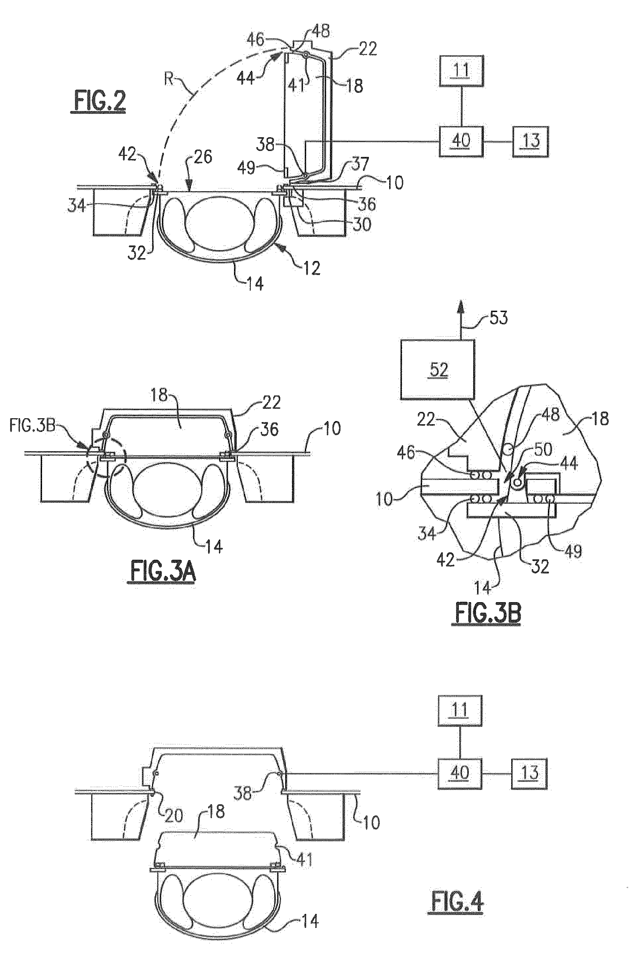

Referring to Figures 1A-1C, a vehicle or habitat 10 is illustrated, which includes an interior environment 11 that is pressurized. In one example, the vehicle 10 is suited for low Earth orbit, lunar, asteroid, Martian or deep space exploration in which an exterior environment 13 has little to no atmospheric pressure. A spacesuit 12 is temporarily secured to the vehicle or habitat 10 and exposed to the exterior environment 13, as shown in Figure 1A. Referring to Figure 1B, the subject 28 enters the spacesuit 12 through a rear entry opening 26 in the upper torso 14 that is aligned with the port 20. The spacesuit 12 detaches from the vehicle 10 to permit a subject 24 to conduct extra vehicular activity or "going EVA," as shown in Figures 1C and 4.

In one example, the spacesuit 12 includes an upper torso 14 that supports a suit having soft limbs 15. The upper torso 14 includes a visor 16. A primary life support system ("PLSS") 18 is secured to the spacesuit 12 during EVA and when the spacesuit is stowed, for example, as shown in Figure 1A. The PLSS 18 includes, for example, an oxygen source 17, a suit temperature control unit 19, and/or a subject monitoring device 21.

The vehicle 10 includes a cover 22 that seals over a port 20 in the vehicle's bulkhead, as shown in Figures 1A and 1C, to maintain pressure in the vehicle 10. The bulkhead separates the interior environment 11 and the exterior environment 13, which is unenclosed and exposed to atmospheric pressure in a donning condition (shown in Figure 1B).

Referring to Figure 2, the cover 22 has a perimeter with a side 37 of the perimeter secured to the bulkhead by a hinged joint 36. The upper torso 14 includes a flange 32 providing the rear entry opening 26 aligned with the port 20 (Figure 1C). The spacesuit 12 is selectively secured relative to the vehicle 10 by a latch 30. The PLSS 18 is not hinged to the spacesuit 12 but instead is secured in the cover 22 and detached from the upper torso 14 of the spacesuit 12 before the cover 22 is opened.

The PLSS 18 includes a locating PLSS 18 to cover 22 feature 41, which may be one or more apertures, that is configured to cooperate with a PLSS latching device 38, which may be three or more pins, for example. The PLSS latching device 38 is configured to selectively retain the PLSS 18 relative to the cover 22 during ingress, egress and periods of non-use. The PLSS latching device 38 cooperates with a pneumatic or solenoid actuator 40 that is in fluid communication with the interior and exterior environments 11, 13. The selection of pneumatic or solenoid actuation is dependent upon the cost of expendables given the mission scenario. The relative pressures of the respective interior and exterior environments 11, 13 provide a pressure differential advantage for a pneumatic actuator 40, which can operate the PLSS latching device 38 even in the event of an electrical power failure.

The PLSS 18 is configured to be rotated about the hinged joint 36 and into engagement with the flange 32 in a donned condition (Figure 3A) in which the PLSS 18 is removably secured to the flange 32. In one example, the side 37 of the perimeter is linear, and the cover 22 is movable between the donning (Figure 1B) and donned (Figures 1C and 4) conditions along a radius R about the hinged joint 36.

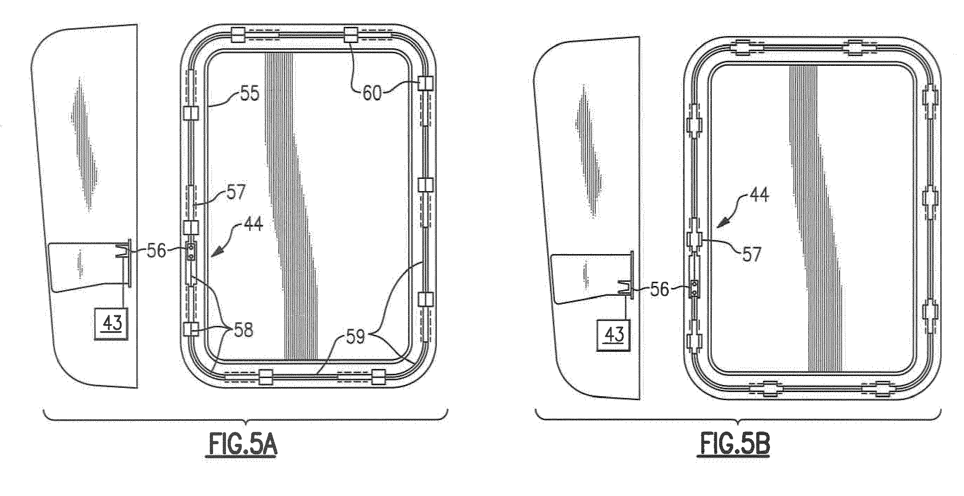

A minimal-mass PLSS 18 to upper torso 14 interlock system consisting of upper torso capture details 42 (Figure 2) and a PLSS-side pinning system 44 (Figures 5A and 5B). A similar system is used in the Orlan series of spacesuits. The single hinge spacesuit and vehicle port interface differs from the Orlan system in two ways. First, the Orlan carries the mass of its system to draw the PLSS to pressure suit and the mechanisms to engage its PLSS to pressure suit interlock system on the spacesuit 12 during EVA, In the single hinge system, all such functions are provided in the cover 22 and not on the spacesuit 12, which reduces the weight to be carried by the subject 24. Secondly, the Orlan has no accommodations to interface with a suitport, thus would pose significant contamination issues in planetary scenarios.

Referring to Figures 5A and 5B, the PLSS-side pinning system 44 (Figure 2) is located outboard of the pressure PLSS to upper torso pressure seals 55 and includes a PLSS/upper torso interlock actuator 56 (Figures 1C, 5A and 5B), locking pins 57 (Figures 5A and 5B), a cable 58 (Figures 5A and 5B), a partial exposed channel in the PLSS through which the cable and pins travel 59 (Figures 5A and 5B) and recesses 60 (Figures 5A and 5B) in the PLSS where PLSS to upper torso interlocking occurs. There is an upper torso capture detail 42 (Figure 2) and a locking pin 56 for each PLSS recess 60 of which, for example, there may be at least six. Ten such recesses are illustrated in Figures 5A and 5B,

Once the spacesuit 12 is docked in the suitport with the PLSS 18 secured to the cover 22, a mechanism 43 housed in the cover 22 moves the exterior feature of the interlock actuator 56 to the position shown in Figure 5A. In this condition shown in Figure 5A, only the cable 58 is passing through the PLSS recesses 60, and corresponding openings in the upper torso capture details 42 (Figure 3B) allow the PLSS 18 move away from the upper torso 14 when the cover 22 is opened, Conversely, once the subject 24 has entered into the spacesuit 12 and the cover 22 to the interior environment 11 has been closed, the mechanism 43 housed in the cover 22 moves the exterior feature of the interlock actuator 56 to the position shown in Figure 5B. When the interlock actuator 56 is in this position, the upper torso capture details 42 (Figure 3B) and positioned in the PLSS recesses 60 and locking pins 57 and passing through the upper torso capture details 42 (Figure 3B) and the PLSS recesses 60 to provide an interlocking attachment of the PLSS 18 to the upper torso 14.

Referring to Figure 3B, the sealed space 50 is connected to a fluid communication source 52, which is configured evacuate the sealed space 50 to the exterior environment 13 (Figure 1B) through a vent 53 to reduce or eliminate contaminants. Additionally or alternatively, a biocide or other chemical agent may be provided by the source 52 to the sealed space 50 to neutralize any contaminants. The sealed space 50 may be treated each time the subject 24 (Figure 1B) returns to the vehicle 10 and the PLSS is again retained within the cover 22, prior to the cover 22 being opened.

First, second, third and fourth seals 34, 46, 48, 49 are arranged in close proximity to perimeter of the cover 22 to provide a sealed space 50 having a small area to limit the amount of contamination. The first seal 34 is arranged between the spacesuit 12 and the vehicle's bulkhead, and the second seal 46 is arranged between cover 22 and the bulkhead, The third seal 48 is arranged between the cover 22 and the PLSS 18, and the fourth seal 49 is arranged between the flange 32 and the PLSS 18. The third seal 48 surrounds the PLSS 18 near the perimeter to keep most of the contaminated surface confined within the cavity 28 of the cover 22.

Although an example embodiment has been disclosed, a worker of ordinary skill in this art would recognize that certain modifications would come within the scope of the claims, For that reason, the following claims should be studied to determine their true scope and content.

## Claims

1. A spacesuit (12) for extravehicular activities comprising:
a hard upper torso (14) including a flange (32) providing a rear entry opening, and a first interlocking device provided on the flange;
soft limbs (15) secured to the hard upper torso (14); and
a primary life support system ("PLSS") (18) including a second interlocking device configured to couple with the first interlocking device and secure the PLSS (18) to the hard upper torso in a donned condition, and the PLSS (18) fully detached and spaced apart from the flange (32) in a donning condition in which the first and second interlocking devices are decoupled from one another.

2. The spacesuit according to claim 1, wherein the PLSS (18) includes at least one of an oxygen source (17), a suit temperature control unit (19), and a subject monitoring device (21).

3. The spacesuit according to claim 1, wherein one of the first and second interlocking devices includes multiple apertures, and the other of the first and second interlocking devices includes multiple pins interconnected by a cable and configured to cooperate and interlock with the apertures,

4. The spacesuit according to claim 1, wherein the PLSS includes a locating feature configured to cooperate with a PLSS latching device (38) during the donning and donned conditions.

5. An extravehicular activity system comprising:
a vehicle (10) having a bulkhead providing a port, the bulkhead separating interior environment and an unenclosed exterior environment, the exterior environment configured to be exposed to atmospheric pressure in a donning condition;
a cover (22) having a perimeter with a side of the perimeter secured to the bulkhead by a hinged joint (36);
a spacesuit (12) supported on the bulkhead in the exterior environment and including a flange (32) providing a rear entry opening aligned with the port; and
a primary life support system ("PLSS") (18) retained in the cover (22) and spaced from the flange in the donning condition, the PLSS (18) configured to be rotated about the hinged joint and into engagement with the flange in a donned condition in which the PLSS is removably secured to the flange.

6. The system according to claim 5, comprising a sealed space (50) provided between the cover (22), the PLSS (18) and the spacesuit (12), and a fluid communication source (52) connected to the sealed space (50) and configured to at least one of evacuate the sealed space to the exterior environment and provided a biocide to the sealed space.

7. The system according to claim 6, comprising first (34), second (46), third (48) and fourth (49) seals arranged in close proximity to perimeter to provide the sealed space (50), the first seal arranged between the spacesuit and the bulkhead, the second seal (46) arranged between cover (22) and the bulkhead, the third seal arranged between the cover (22) and the PLSS (18), and the fourth seal (49) arranged between the flange (32) and the PLSS (18).

8. The system according to claim 5, wherein the side of the perimeter is linear, and the cover (22) is movable between the donning and donned conditions along a radius about the hinged joint (36).

9. The system according to claim 5, comprising a PLSS latching device (38) configured to selectively retain the PLSS relative to the cover (22), the PLSS latching device (38) including a pneumatic actuator in fluid communication with the interior and exterior environments, which are configured to provide a pressure differential for the pneumatic actuator.

10. The system according to claim 5, wherein the spacesuit (12) includes a hard upper torso (14) and soft limbs (15) supported by the hard upper torso (14), the hard upper torso (15) providing the flange (32).

11. A method of donning or doffing a spacesuit (12) comprising the steps of:
supporting a spacesuit-mounted primary life support system ("PLSS") (18) relative to a vehicle;
treating a sealed space (50) between the PLSS (18) and a vehicle to remove contaminants; and
detaching the PLSS (18) from the spacesuit (12).

12. The method according to claim 11, further comprising the steps of:
arranging a PLSS (18) in a detached relationship from a spacesuit (12);
inserting a subject through a rear entry opening of the spacesuit (12);
sealing the PLSS (18) to the spacesuit over the rear entry opening;
locking the PLSS to the spacesuit (12);
detaching the PLSS from the vehicle; and
detaching the spacesuit from the vehicle to go EVA.

13. The method according to claim 12, wherein the locking of the PLSS further includes actuating a cable (58) connected a plurality of pins to secure the PLSS to the spacesuit.

14. The method according to claim 13, wherein the detaching of the spacesuit from the vehicle (10) includes pulling the cable (58) to release the pins from the PLSS.

15. The method according to claim 12, wherein the detaching of the PLSS from the vehicle (10) includes pneumatically actuating a PLSS latch to release the PLSS from the vehicle (10).
